# EUROPEAN PATENT SPECIFICATION

(11) **EP 2 039 452 B1**
(45) Date of publication and mention of the grant of the patent: **21.11.2012**
(21) Application number: 08164637.4
(22) Date of filing: 18.09.2008
(51) Int. Cl.: B23D 49/16

(54) **Cutting angle indicator in jigsaw housing.**
Schneidwinkelanzeige in Stichsägengehäuse.
Indicateur d'angle de découpe d'un carter de scie sauteuse.

(30) Priority: 21.09.2007 US 859314
(43) Date of publication of application: 25.03.2009
(73) Proprietor: Black & Decker, Inc., Newark, DE 19711 (US)
(72) Inventor: Kuehne, Brent A., Red Lion, MD 17356 (US); Baskar, Ashok, Lutherville, MD 21093 (US); Turner, Terry L., Towson, MD 21204 (US); Gibbons, Louis A., Stevensville, MD 21666 (US); Vantran, John S., Parkton, MD 21120 (US)
(74) Representative: Bell, Ian Stephen

(56) References cited:
- EP-A1- 0 603 552
- DE-A1- 2 435 845
- DE-A1- 19 926 387
- US-A1- 2007 000 368

## Description

The present application relates to to a jigsaw as per the preamble of claim 1. An example of such a jigsaw is disclosed by EP 603 552 A.

Typically, a jigsaw can cut perpendicular to a plane of a workpiece. In some applications, however, the jigsaw can be pivoted to form a non-perpendicular cutting angle, e.g., a bevel cut at forty five degrees. Certain applications can require that the angle, at which the jigsaw is pivoted, be at a relatively accurate and specific angle. In this instance, additional tools can be used to confirm the angle between the housing and the workpiece or tick marks can be formed on the shoe and/or the housing and used to judge the angle based on the relative position of the tick marks.

The present invention generally provides a jigsaw having the features of claim 1.

Further areas of applicability will become apparent from the description provided herein.

The drawings described herein are for illustration purposes.
FIG. 1 is a perspective view of an example of a jigsaw having an angle indicator wheel visible through a window in the housing and a dust extraction airflow from a cutting area, through the housing and out of a vacuum port in accordance with the present teachings.
FIG. 2 is a perspective view of another example of a jigsaw having an angle indicator wheel visible through a window in the housing and a dust extraction airflow from a cutting area, through a shoe member and out of a vacuum port that extends from the shoe member in accordance with the present teachings.
FIG. 3 is a perspective view of a further example of a jigsaw similar to the jigsaw of FIG. 2 and includes a laser light module connected to a front of the housing and a keel assembly connected to a bottom of the housing in accordance with the present teachings.
FIG. 4 is a perspective view of yet another example of a jigsaw having a shoe member that can be secured at a zero degree cutting angle (i.e., a perpendicular cutting angle) by moving the shoe member in an axial direction relative to the housing in accordance with the present teachings.
FIG. 5 is a perspective view of a further example of a jigsaw having a shoe member that can be secured at the zero degree cutting angle in accordance with the present teachings.
FIG. 6 is a partial front view of the jigsaw of FIG. 3 showing the cutting angle at one position selected from a range of positions in accordance with the present teachings.
FIG. 7 is a partial side view of the jigsaw housing of FIG. 1 showing the window through which a portion of the angle indicator wheel can be seen to indicate the angle between the jigsaw housing and the shoe member in accordance with the present teachings.
FIG. 8 is similar to FIG. 7 and shows a perimeter of the window illuminating the information on the angle indicator wheel in accordance with the present teachings.
FIG. 9 is similar to FIG. 7 and shows a portion of the angle indicator wheel illuminated and shining through the window in accordance with the present teachings.
FIG. 10 is a simplified partial cross-sectional view of a housing of a jigsaw showing a dust extraction airflow from a cutting area up into an airflow pathway formed through the housing, through an inner periphery of the angle indicator wheel and exhausting through an exhaust port in a rear portion of the housing in accordance with the present teachings.
FIG. 11 is similar to FIG. 10 and shows a dust extraction airflow from the cutting area through a scoop member that leads into an airflow pathway formed through the housing, through an inner periphery of the angle indicator wheel and exhausting through the exhaust port in the rear portion of the housing in accordance with the present teachings.
FIG. 12 is a partial perspective view of a scoop member formed on a jigsaw housing through which a dust extraction airflow departs from the cutting area into a pathway formed in the housing in accordance with the present teachings.
FIG. 13 is an exploded assembly view of an exemplary shoe subassembly that can be implemented with the jigsaws illustrated in FIGS. 1, 2 and/or 3 in accordance with the present teachings.
FIG. 14 is a perspective view of the shoe subassembly Of FIG. 13 showing a locking mechanism having a bevel lock arm and a shoe insert coupled to a channel formed in the shoe member in accordance with the present teachings.
FIG. 15 is a simplified cross-sectional view of the shoe subassembly illustrated in FIG. 14 in accordance with the present teachings.
FIG. 16 is a diagram of a partial cross-sectional view of the shoe insert and the shoe member with a user flexing the shoe insert into a channel formed in the shoe member in accordance with the present teachings.
FIG. 17 is similar to FIG. 16 and shows the shoe insert and the shoe member being a monolithic member in accordance with the present teachings.
FIG. 18 is a flowchart of an exemplary method of assembling a shoe insert into a shoe member in accordance with the present teachings.
FIG. 19 is a partial bottom view of a shoe member pivotally coupled to the housing having stop members that include a wedge shape in accordance with the present teachings.
FIG. 20 is similar to FIG. 19 and shows the shoe assembly positioned at an angle other than the zero degree cutting angle (i.e., not at a perpendicular cutting angle) so that the stop members are not contained within complementary pockets formed in the channels of the shoe member in accordance with the present teachings.
FIG. 21 is similar to FIG. 20 and shows the shoe assembly positioned at an angle other than the zero degree cutting angle so that the stop members are not contained within the complementary pockets formed in the channels of the shoe member. But in this example, the shoe member is engaged to the stop members in an axial direction opposite that of FIG. 20 in accordance with the present teachings.

The following description is merely exemplary in nature and is not intended to limit the present teachings, their application or uses. It should be understood that throughout the drawings, corresponding reference numerals can indicate like or corresponding parts and features.

Moreover, certain terminology can be used for the purpose of reference only and do not limit the present teachings. For example, terms such as "upper," "lower," "above" and "below" can refer to directions in the drawings to which reference is made. Terms such as "front," "back," "rear" and "side" can describe the orientation of portions of the component, function, system, etc. within a consistent but arbitrary frame of reference which can be made more clear by reference to the text and the associated drawings describing the component, function, system, etc. under discussion. Such terminology may include the words specifically mentioned above, derivatives thereof and words of similar import. Similarly, the terms "first," "second" and other such numerical terms referring to structures, systems and/or methods do not imply a sequence or order unless clearly indicated by the context.

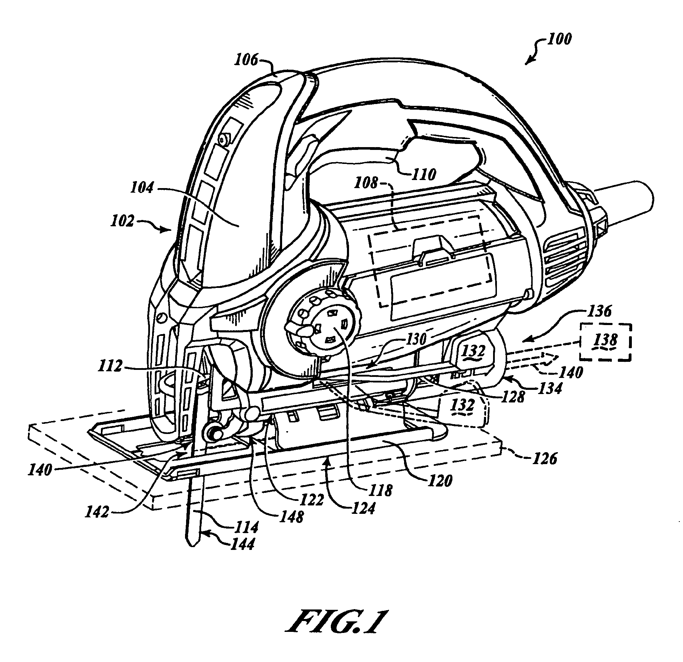

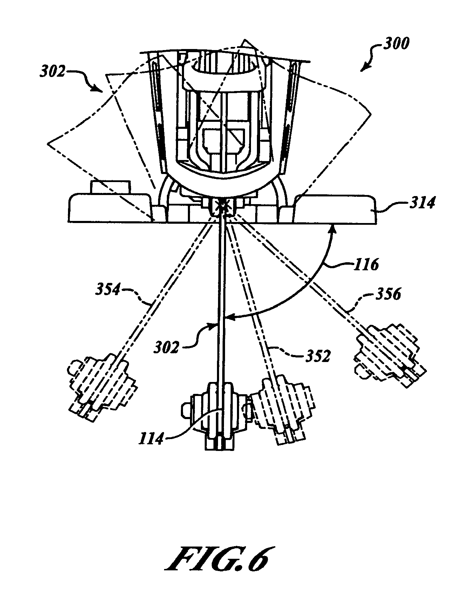

With reference to FIG. 1, a jigsaw 100 generally includes a housing 102 that can be formed of two half shells 104, 106. The housing 102 can contain a motor 108. When activated by a trigger assembly 110, the motor 108 can provide a reciprocating and/or pendulum motion to a cutting blade holder 112 on an end of a reciprocating shaft to drive a cutting blade 114 at a cutting angle 116 (FIG. 6). A control member 118 on a side of the housing 102 can control a rate of reciprocation and/or a magnitude of a pendulum motion of the cutting blade 114.

A shoe member 120 can be coupled to a bottom 122 of the housing 102 in such a way as to permit the shoe member 120 to pivot relative to the housing 102. As the shoe member 120 pivots relative to the housing 102, the cutting blade 114 can be orientated at various angles (i.e., one or more of the cutting angles 116 (FIG. 6)) relative to the shoe member 120.

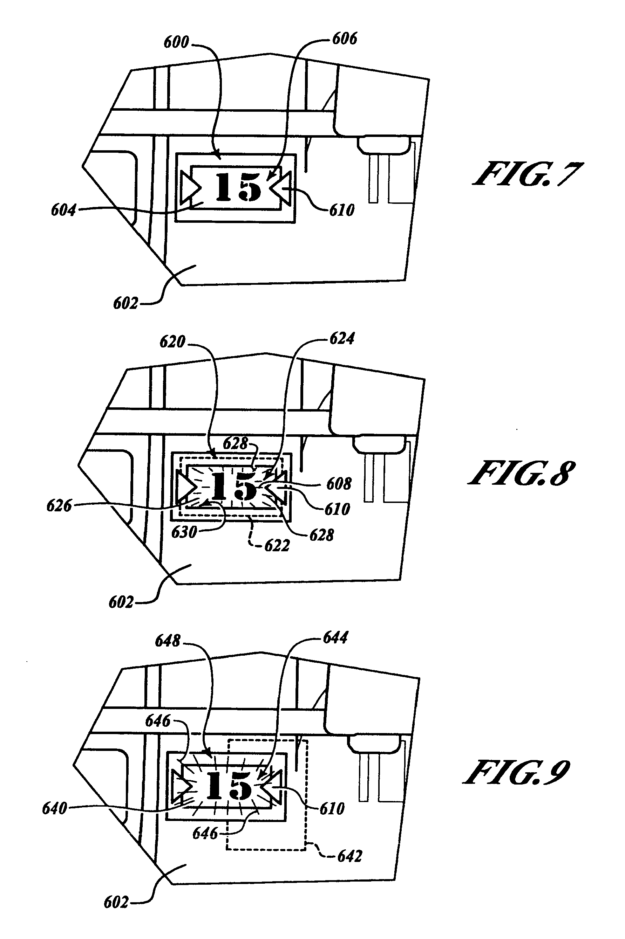

A bottom surface 124 of the shoe member 120 can abut a workpiece 126, which can be wood, plastic, metal, other suitable materials and one or more combinations thereof and can be in the form of pipe, sheet material, stock material, other suitable forms and/or materials and one or more combinations thereof. The shoe member 120 can be pivoted relative to the housing 102 to adjust the cutting angle 116 (FIG. 6) of the jigsaw 100, e.g., at a forty five degree cutting angle. As the shoe member 120 is moved relative to the housing 102, an angle indicator wheel 128 that can be rotatably coupled to the shoe member 120 (see, e.g., FIG. 9) can indicate the cutting angle 116 of the jigsaw 100.

Further, a locking mechanism 130 can include a bevel lever 132 that can be adjusted between an unlocked condition, as shown (in phantom) in FIG. 1 and a locked condition, as shown in FIG. 1. In the unlocked condition, the locking mechanism 130 can permit the shoe member 120 to pivot relative to the housing 102. In the locked condition, the locking mechanism 130 can prevent the shoe member 120 from pivoting relative to the housing 102. In this regard, the cutting angle 116 (FIG. 6) to which the shoe member 120 can be pivoted relative to the housing 102, when the locking mechanism 130 is in the unlocked condition, can be indicated by the angle indicator wheel 128.

A dust extraction port 134 can be formed on a rear portion 136 of the housing 102 such that a vacuum source 138 can be connected with various suitable connections to the dust extraction port 134. A dust extraction airflow 140 can be extracted from a cutting area 142. From the cutting area 142, the dust extraction airflow 140 can move into the housing 102 near a rear edge 144 of the cutting blade 114, through the housing 102 and out through the dust extraction port 134.

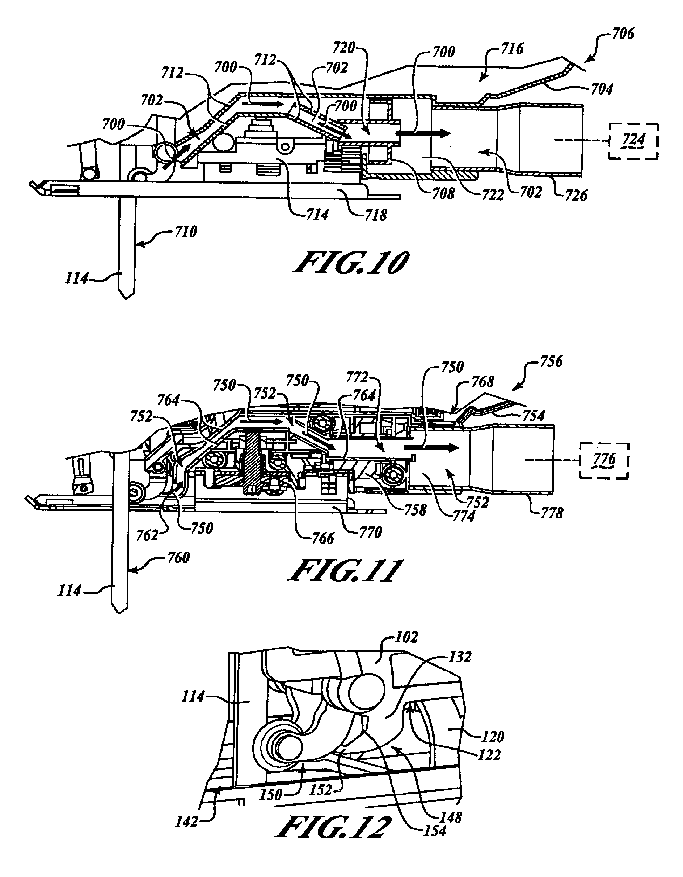

The dust extraction airflow 140 can travel through the housing 102 and can be routed through an inner periphery of the angle indicator wheel 128. In one example, the angle indicator wheel 128 can be similar to an angle indicator wheel 708 having an inner periphery 720, as shown in FIG. 10. In another example, the angle indicator wheel 128 can be similar to an angle indicator wheel 758 having an inner periphery 772, as shown in FIG. 11.

In a further example and with reference to FIGS. 1 and 12, the dust extraction airflow 140 can exit the cutting area 142 through a scoop member 148 that extends from the housing 102. The scoop member 148 can be similar to a scoop member 762, as shown in FIG. 11. In the above examples, the shoe member 120 can be pivoted relative to the housing 102 without interrupting the dust extraction airflow 140 through the housing 102 and through the angle indicator wheel 128.

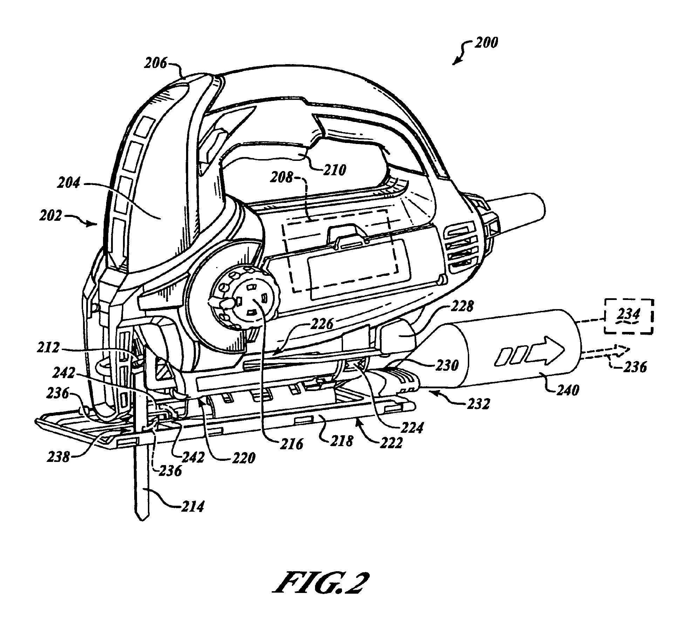

With reference to FIG. 2, a jigsaw 200 includes a housing 202 that can be formed of two half shells 204, 206. The housing 202 can contain a motor 208. When activated by a trigger assembly 210, the motor 208 can provide a reciprocating and/or pendulum motion to the reciprocating shaft to drive a cutting blade 214 at one or more of the cutting angles 116 (FIG. 6). A control member 216 on a side of the housing 202 can control the rate of reciprocation and/or the magnitude of the pendulum motion of the cutting blade 214.

A shoe member 218 can be coupled to a bottom 220 of the housing 202 in such a way as to permit the shoe member 218 to pivot relative to the housing 202. As the shoe member 218 pivots relative to the housing 202, the cutting blade 214 can be orientated at the various cutting angles 116 (FIG. 6) relative to the shoe member 218. A bottom surface 222 of the shoe member 218 can abut the workpiece 126 (FIG. 1).

As the shoe member 218 is moved relative to the housing 202, an angle indicator wheel 224 can be rotatably coupled to the shoe member 218 (see, e.g., FIG. 9), and can indicate the cutting angle 116 (FIG. 6) of the jigsaw 200. Further, a locking mechanism 226 can include a bevel lever 228 that can be adjusted between an unlocked condition (e.g., in phantom in FIG. 1) and a locked condition. The cutting angle 116 (FIG. 6) to which the shoe member 218 can be pivoted relative to the housing 202, when the locking mechanism 226 is in the unlocked condition, can be indicated by the angle indicator wheel 224.

A dust extraction port 230 can be formed on a rear portion 232 of the shoe member 218, in contrast to the dust extraction airflow 140 through the housing 102 (FIG. 1). A vacuum source 234 can be connected to the dust extraction port 230. A dust extraction airflow 236 can be extracted from a cutting area 238. From the cutting area 238, the dust extraction airflow 236 can move through the shoe member 218 and out through the dust extraction port 230 that extends therefrom. A vacuum source adapter 240 can be connected to the dust extraction port 230 formed in the shoe member 218 and can be used to connect to the vacuum source 234. Inlets 242 can be formed at one or more locations on the shoe member 218 adjacent the cutting area 238. From the inlets 242, the dust extraction airflow 236 can be routed through channels in the shoe member 218 to the dust extraction port 230.

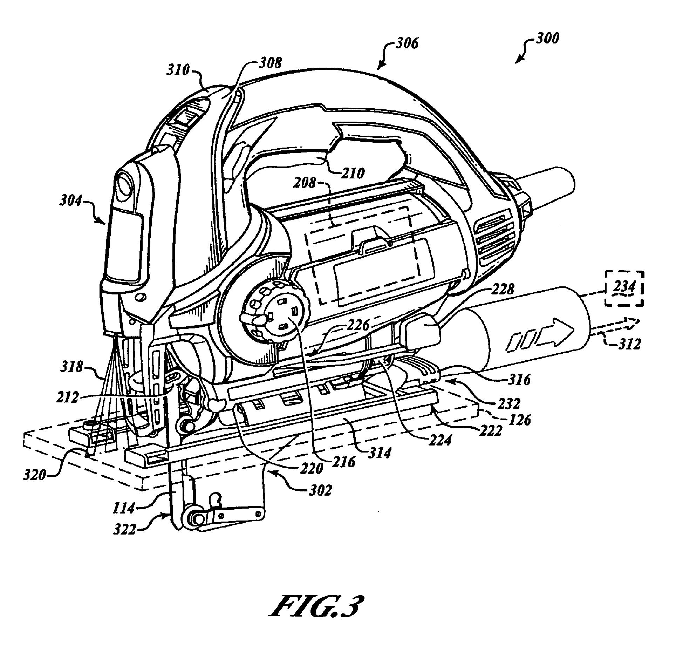

With reference to FIG. 3, a jigsaw 300 can be similar to the exemplary jigsaw 200 (FIG. 2) and can also include a keel assembly 302 and/or a laser module 304 that can be connected to a housing 306 having two housing half shells 308, 310 implemented in a similar fashion to the jigsaw 200. The jigsaw 300 can further include a dust extraction airflow 312 through a shoe member 314. The dust extraction airflow 312 can exit from a dust extraction port 316 that can extend therefrom. The laser module 304 can project a laser light 318 and can produce a laser light pattern 320. The laser light pattern 320 can produce, for example, a sequence of dashes and/or dots beyond a front side 322 of the cutting blade 114 and can highlight a path of the cutting blade 114 through the workpiece 126.

The keel assembly 302 can provide additional straight-line accuracy when cutting a straight line in the workpiece 126 (e.g., can help avoid wandering of the jigsaw cutting line). The keel assembly 302 can be pivoted with the housing 306 when the shoe member 314 is moved at an angle (i.e., one or more cutting angles 116 (FIG. 6)) relative to the housing 306. In this regard, the shoe member 314 can be pivoted relative to the housing 306 but the keel assembly 302 can remain generally in line with the housing 306 so as to provide, for example, a straight bevel cut through the workpiece 126.

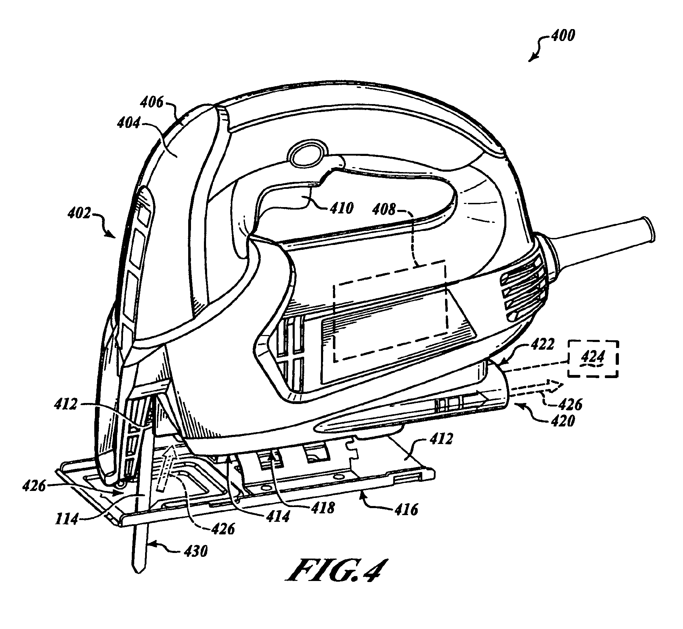

With reference to FIG. 4, a jigsaw 400 includes a housing 402 that can be formed of two half shells 404, 406. The housing 402 can contain a motor 408. When activated by a trigger assembly 410, the motor 408 can provide a reciprocating and/or pendulum motion to the reciprocating shaft to drive the cutting blade 114 at one of the cutting angles 116 (FIG. 6).

A shoe member 412 can be coupled to a bottom 414 of the housing 402 in such a way as to permit the shoe member 412 to pivot relative to the housing 402. As the shoe member 412 pivots relative to the housing 402, the cutting blade 114, can be orientated at various angles (i.e., one or more of the cutting angles 116 (FIG. 6)) relative to the shoe member 412. As is known in the art, a bottom surface 416 of the shoe member 412 can abut the workpiece 126 (FIG. 1).

A locking mechanism 418 can be adjusted between an unlocked condition that can permit the shoe member 412 to pivot relative to the housing 402 and a locked condition that can prevent the shoe member 412 from pivoting relative to the housing 402. In one example, the locking mechanism 418 can include one or more fasteners (not shown) that can secure the shoe member 412 to the bottom 414 of the housing 402. The fasteners can be partially removed to permit the shoe member 412 to pivot relative to the housing 402.

A dust extraction port 420 can be formed on a rear portion 422 of the housing 402 such that a vacuum source 424 can be connected to the dust extraction port 420. A dust extraction airflow 426 can be extracted from a cutting area 428. From the cutting area 428, the dust extraction airflow 426 can move into the housing 402 near a rear side 430 of a cutting blade 438, through the housing 402 and out through the dust extraction port 420.

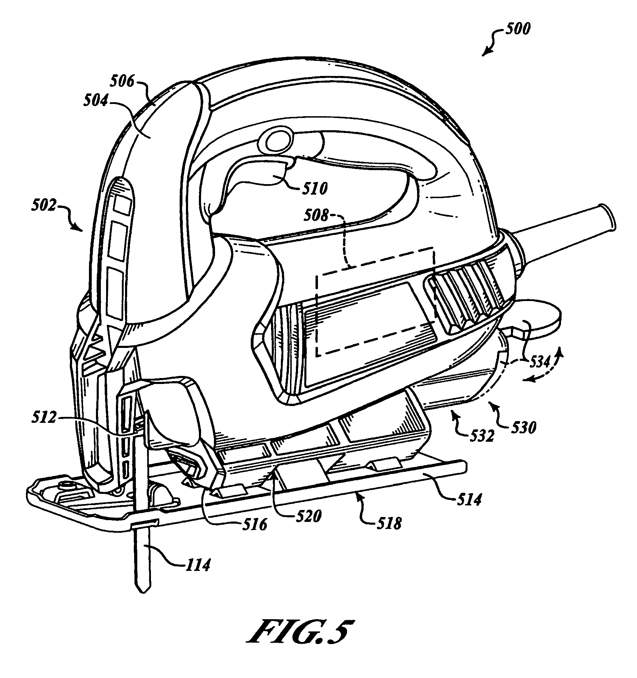

With reference to FIG. 5, a jigsaw 500 generally includes a housing 502 that can be formed of two half shells 504, 506. The housing 502 can contain a motor 508. When activated by a trigger assembly 510, the motor 508 can provide a reciprocating and/or pendulum motion to the reciprocating shaft to drive a cutting blade 114 at one or more of the cutting angles 116 (FIG. 6).

A shoe member 514 can be coupled to a bottom 516 of the housing 502 in such a way as to permit the shoe member 514 to pivot relative to the housing 502 in a fashion that is similar to the jigsaw 400 (FIG. 4). A bottom surface 518 of the shoe member 514 can abut the workpiece 126 (FIG. 1). In addition, a locking mechanism 520 can be adjusted between an unlocked condition that can permit the shoe member 514 to pivot relative to the housing 502 and a locked condition that can prevent the shoe member 514 from pivoting relative to the housing 502. The locking mechanism 520 can include one or more fasteners (not shown) that can secure the shoe member 514 to the bottom 516 of the housing 502. The fasteners can be partially removed (i.e., the unlocked condition) to permit the shoe member 514 to pivot relative to the housing 502.

A storage container 530 can be formed on a rear portion 532 of the housing 502 such that blades, tools, etc. can be stored within the storage container 530. A storage container cover 534, illustrated in an open condition, can be closed (shown in phantom line) to contain whatever may be placed within the storage container 530.

With reference to FIG. 6, the cutting angle 116 of the cutting blade 114 of the jigsaw 300 is shown relative to the shoe member 314 of the jigsaw 300. The keel assembly 302 is also attached to the housing 306. The cutting angle 116 (illustrated in solid line) is positioned at the zero degree cutting angle, i.e., a perpendicular cutting angle relative to the shoe member 314. The cutting angle 116 can also be positioned at one or more cutting angles such as a cutting angle 352 (shown in phantom line) that can be positioned at about positive fifteen degrees, while a cutting angle 354 (shown in phantom line) can be positioned at about negative thirty degrees. A cutting angle 356 (shown in phantom line) can be positioned at about positive forty five degrees. It will be appreciated in light of the disclosure that various cutting angles can be implemented with any of the jigsaws 100, 200, 300, 400, 500 (FIGS. 1-5).

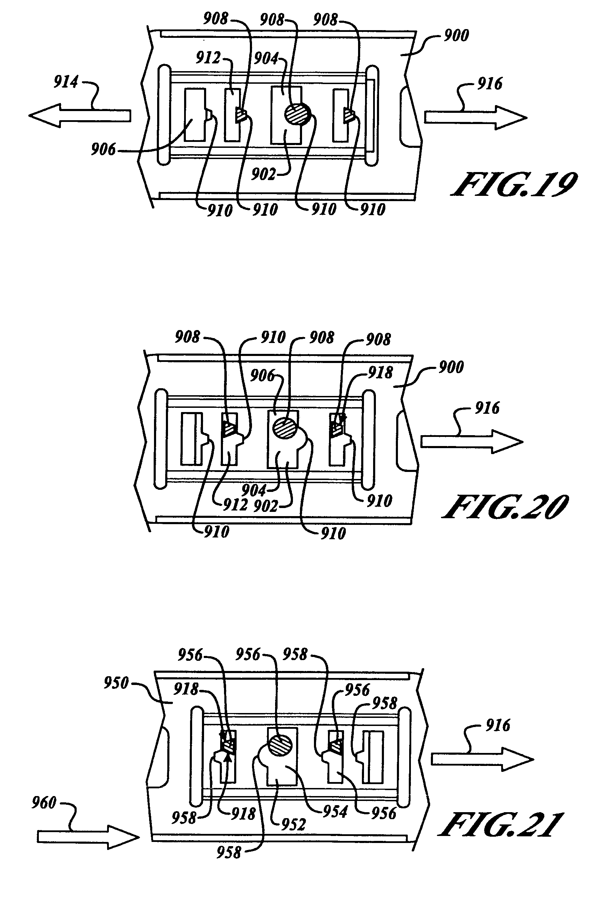

With reference to FIGS. 1 - 5, it will be appreciated in light of the disclosure that any of the jigsaws 100, 200, 300, 400, 500 can be adjusted to provide one or more of the cutting angles 116 with or without the keel assembly 302 attached thereto. Moreover, the shoe member 120, 218, 314, 416, 516 can be positively locked to the housing 102, 202, 306, 402, 502, in addition to positioning the locking mechanism 130, 226, 422, 522 in the locked condition when the shoe member 120, 218, 314, 416, 516 is in the zero degree angular position or at other predetermined angular positions. In this regard, the shoe member 120, 218, 314, 416, 516 can be moved axially relative to a cutting direction of the jigsaw 100, 200, 300, 400, 500, to further lock the shoe member 120, 218, 314, 416, 516 to the housing. With reference to FIGS. 19 and 20, a shoe member 900 can be moved in a direction 914 that is axially backward relative to a cutting direction of the jigsaw. With reference to FIG. 21, a shoe member 950 can be moved in a direction 964 that is axially forward or in line with a cutting direction of the jigsaw, as is discussed below.

With reference to FIG. 7, a window 600 is formed in a housing 602 through which a portion of an angle indicator wheel 604 is displayed. Numbers 606 can be affixed to the angle indicator wheel 604 such that certain numbers 606 can be displayed in the window 600 to indicate a specific angular position of the shoe member 120, 218, 314 (FIGS. 1 - 3) relative to the workpiece 126 (FIG. 1). It will be appreciated in light of the disclosure that the numbers 606 are but one example of the information that can be displayed through the window 600. Other icons, graphics, symbols, specific indicia and/or one or more combinations thereof can be used and, as such, can be descriptive of angular increments between zero degrees and forty five degrees. For example, a line 608 (FIG. 8) can be aligned with the numbers 606.

The window 600 in the housing 602 can further contain arrows 610 and/or one or more other suitable additional indicators that can provide for a relatively more precise alignment of the angle indicator wheel 604 in the window 600 and thus at a desired cutting angle. In this regard, the user can more readily identify the exact position of the shoe member 120, 218, 314 based on the position of the numbers 606 and/or other graphics, icons, etc. in the window 600 relative to the arrows 610 formed around the window 600. It will be appreciated in light of the disclosure that the window 600, as described above, can be implemented on any of the jigsaws 100, the jigsaw 200 and/or the jigsaw 300.

In one example and with reference to FIG. 8, a window 620 can include a perimeter illumination mechanism 622 that can illuminate numbers 624 on an angle indicator wheel 626 to more readily view the numbers 624. The perimeter illumination mechanism 622 that can emanate light 628 from the entire inner periphery 630 of the window 620 or portions thereof. The perimeter illumination mechanism 622 can include one or more light emitting diodes of one or various colors, one or more small incandescent bulbs and/or one or more combinations thereof to provide suitable illumination to the angle indicator wheel 604.

With reference to FIG. 9, an angle indicator wheel 640 can contain within the angle indicator wheel 640 (or adjacent thereto), an illumination source 642 that can shine through the angle indicator wheel 640 and illuminate numbers 644 thereon. By illuminating the angle indicator wheel 640, portions of the angle indicator wheel 640 can glow (i.e., emit light 646) as viewed through a window 648. The glowing angle indicator wheel 640 can be shown to more readily highlight the numbers 644 on the angle indicator wheel 640. It will be appreciated in light of the present disclosure that the window 600, the window 620 or the window 648 can be implemented on the jigsaw 100, the jigsaw 200 and the jigsaw 300.

With reference to FIG. 10, a dust extraction airflow 700 can be directed through an airflow pathway 702 that can be established by an exemplary housing 704 of a jigsaw 706. In one example, a portion of the airflow pathway 702 can be through an angle indicator wheel 708, which can be similar to the angle indicator wheel 128 (FIG. 1). The dust extraction airflow 700 can begin at a rear edge 710 of the cutting blade 114. The dust extraction airflow 700 can continue up into the airflow pathway 702 that can be provided by multiple ribs 712 formed in the housing 704.

The dust extraction airflow 700 can continue through the airflow pathway 702 that can continue through the housing 704, above a shoe block member 714 toward a rear portion 716 of the housing 704. The dust extraction airflow 700 can turn downward through the airflow pathway 702 toward a shoe member 718 and can be directed through an inner periphery 720 of the angle indicator wheel 708 so as to define a portion of the airflow pathway 702 therethrough. The dust extraction airflow 700 can move through the angle indicator wheel 708 and out through a dust extraction port 722 formed in the rear portion 716 of the housing 704.

A vacuum source 724 can attach to the dust extraction port 722 formed in the housing 704 to establish the dust extraction airflow 700 through the airflow pathway 702 from the rear edge 710 of the cutting blade 114 out through the dust extraction port 722. Similar to what is shown in FIG. 6, the shoe member 718 can be moved relative to the housing 704 and can establish and maintain the dust extraction airflow 700 through the airflow pathway 702 in any of the cutting angles 116 (FIG. 6).

In one example, an adapter member 726 can connect the dust extraction port 722 to the vacuum source 724. The adapter member 726 can be configured as a component that can releaseably couple to the dust extraction port 722 and/or the vacuum source 724 or can be integral or fixedly coupled to the dust extraction port 722 and/or the vacuum source 724.

With reference to FIG. 11, a dust extraction airflow 750 can be directed through an airflow pathway 752 formed in an exemplary housing 754 of a jigsaw 756. It will be appreciated in light of the disclosure that the dust extraction airflow 750 through the airflow pathway 752 can be implemented on the jigsaw 100 (FIG. 1). In this regard, a portion (or all) of the dust extraction airflow 750 can be directed through an angle indicator wheel 758, which can be similar to the angle indicator wheel 128 (FIG. 1).

In one example, the dust extraction airflow 750 can begin at a rear edge 760 of the cutting blade 114. The dust extraction airflow 750 can continue up through an air scoop member 762 and into multiple ribs 764 formed in the housing 754 that can establish the airflow pathway 752. The airflow pathway 752 can continue through the housing 754, above a shoe block member 766 toward a rear portion 768 of the housing 754. The dust extraction airflow 750 in the airflow pathway 752 can turn downward toward a shoe member 770 and can be directed through an inner periphery 772 of the angle indicator wheel 758. The airflow pathway 752 can move through the angle indicator wheel 758 and out through a dust extraction port 774 formed in the rear portion 768 of the housing 754.

A vacuum source 776 can attach to the dust extraction port 774 formed in the housing 754 to establish the dust extraction airflow 750 from the rear edge 760 of the cutting blade 114 out through the dust extraction port 774. Similar to what is shown in FIG. 6, the shoe member 770 can be moved relative to the housing 754 that can establish the airflow pathway 752 in any of the cutting angles 116 (FIG. 6).

It will be appreciated in light of the disclosure that the vacuum source 138, 234, 428, 528, 724, 776 can be one or more of a canister vacuum, central vacuum system, dust collection system or the like. In one example, an adapter member 778 can connect the dust extraction port 774 to the vacuum source 776. The adapter member 778 can be configured as a component that can releaseably couple to the dust extraction port 774 and/or the vacuum source 776 or can be integral or fixedly coupled to the dust extraction port 774 and/or the vacuum source 776.

With reference to FIG. 12, the scoop member 148 can be positioned behind an upper carrier assembly 150 that is configured to support the cutting blade 114. Behind the scoop member 148, the shoe member 120 can be secured to the bottom 122 of the housing 102. The scoop member 148 can establish a front lip 152 that can extend toward the cutting area 142. From the front lip 152, two arcuate side wall members 154 can extend upward toward the housing 102.

In one example, the arcuate side wall members 154 and the front lip 152 can be configured as a component that can releaseably couple to the housing 102 or can be integral or fixedly coupled to the housing 102. The dust extraction airflow 140 can enter through the scoop member 148 and travel from the scoop member 148 through the housing 102 (e.g., through the airflow pathway 752 in FIG. 11) to be exhausted from the dust extraction port 134 (FIG. 1).

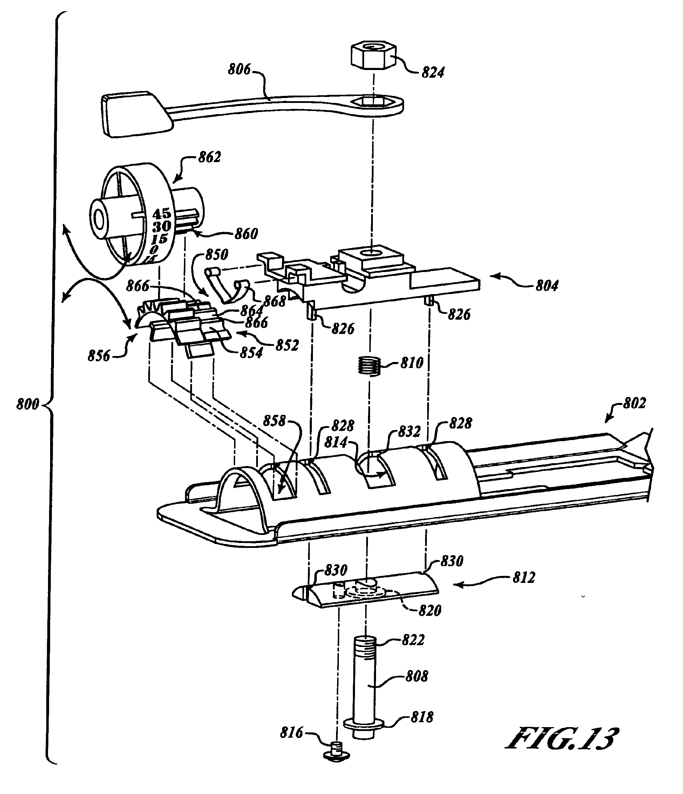

With reference to FIGS. 13, 14 and 15, a shoe subassembly 800 includes a shoe member 802, a shoe block member 804 and a bevel lever 806. The bevel lever 806 can be attached to the shoe block member 804 with a fastener 808 that can include a spring 810 to provide tension to the bevel lever 806, especially in the locked condition. In one example, the spring 810 can be omitted.

A clamp member 812 can be connected to a bottom surface 814 of the shoe member 802 with a fastener 816. In another example, the clamp member 812 can be configured as a component that can releaseably couple to the shoe member 802 or can be integral or fixedly coupled to the shoe member 802. A head 818 of the fastener 808 can be received in an aperture 820 formed in the clamp member 812. A threaded end 822 of the fastener 808 can be received by a threaded member 824 that can be fixed to the bevel lever 806.

Posts 826 that each can extend from the shoe block member 804 can extend through grooves 828 formed on the shoe member 802 and grooves 830 on the clamp member 812. The fastener 808 can also pass through a groove 832 formed on the shoe member 802. The groove 828, the groove 830 and/or the groove 832 can be used to align the shoe member 802, the shoe block member 804 and the clamp member 812. The threaded member 824 can be configured to be fixed coupled to or integral with the bevel lever 806.

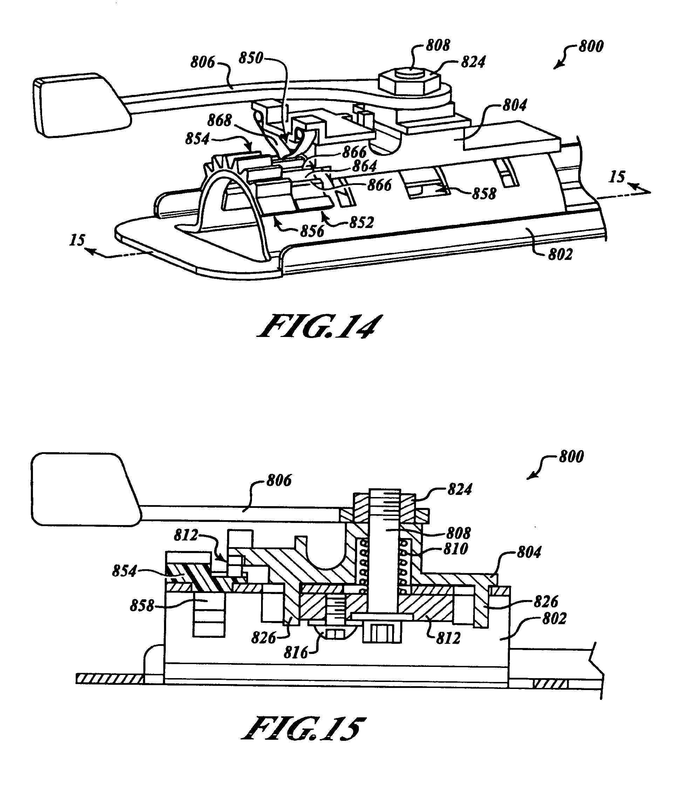

Similar to the bevel lever 132 in FIG. 1, the bevel lever 806 can be moved between the locked condition and the unlocked condition. When moving from the unlocked condition to the locked condition, the bevel lever 806 moves the threaded member 824 to draw the fastener 808 upward (i.e., toward the top of the page in FIG. 15). By drawing the fastener 808 upward, a clamping force between the clamp member 812 and the shoe block member 804 on the shoe member 802 can be increased. In the locked condition, the clamping force between the clamp member 812 and the shoe block member 804 is sufficient to prevent the pivoting of the shoe member 802. As the bevel lever 806 is moved from the unlocked condition to the locked condition, the movement of the threaded member 824 with the bevel lever 806 can push the fastener 808 downward. By pushing the fastener 808 downward, the clamping force can be sufficiently reduced to a value such that the shoe member 802 can pivot relative to the shoe block member 804 and ultimately a housing of a jigsaw to which the shoe block member 804 can be attached, e.g., the jigsaw 100 (FIG. 1).

With reference to FIG. 14, an interaction member 850 can secure to and can extend from the shoe block member 804. The interaction member 850 can contact a first row of partial gear teeth 852 formed on a shoe insert 854 that can be coupled to the shoe member 802. The first row of partial gear teeth 852 can be adjacent a second row of partial gear teeth 856. The shoe insert 854 can be formed of a flexible material so as to permit the bending of the shoe insert 854 into a curved channel 858 (FIG. 13) formed in the shoe member 802.

The first row of partial gear teeth 852 can selectively contact the interaction member 850 that extends from the shoe block member 804. The second row of partial gear teeth 856 can mesh with partial gear teeth 860 formed on an angle indicator wheel 862 (FIG. 13). In one example, one or more intermediate gears (whole or partial) can be disposed between a shoe member and an indicator wheel so that pivoting the shoe member relative to a jigsaw housing can rotate the one or more intermediate gears and the indicator wheel.

The interaction member 850 that extends from the shoe block member 804 can provide a momentary positive lock between the shoe block member 804 and the shoe member 802 via engagement between the interaction member 850 and the first row of partial gear teeth 852. As the shoe member 802 is pivoted relative to the shoe block member 804, the interaction member 850 can deflect and jump from each of the pockets 864 formed between gear teeth 866 in the first row of partial gear teeth 852.

In one example, the interaction member 850 can be a leaf spring 868 that can connect to the shoe block member 804. The deflection of the leaf spring 868, as a portion of the leaf spring 868 jumps between the pockets 864 formed between the gear teeth 866, can provide an audible click. The audible click can be an indicator to a user that the shoe member 802 has pivoted to the next angular detent, e.g., a move from the fifteen degree cutting angle 352 (FIG. 6) to a thirty degree cutting angle. In a further example, a spring biased member, such as a ball, post, etc., can similarly interact with the pocket 864 of the gear teeth 866. The spring biased member can be coupled to the shoe block member 804 and extend toward the shoe insert 854.

The shoe subassembly 800 can be assembled, as illustrated in FIG. 14, prior to fully assembling the jigsaw, which, for example, can be the jigsaw 100, 200, 300 (FIGS. 1, 2 and 3). In addition, a locking mechanism 870 (FIG. 14) can be configured so that the shoe clamping force for the locking mechanism 130, 226, 870 (FIGS. 1, 2 and 15) can be set and configured prior to assembling the shoe subassembly 800 with the jigsaw housings 102, 202, 302. In one example, the shoe clamping force can be set so that a range of shoe clamping force values is selectively available to the user, as the user manipulates the locking mechanism 130, 226, 870 (FIGS. 1, 2 and 15) between the locked and unlocked conditions. The range of clamping force values can be set, thus predetermined, by selecting a distance 872 from the head 818 of the fastener 808 and the threaded member 824 on the bevel lever 806. It will be appreciated in light of the disclosure that the shoe subassembly 800 can be assembled, the clamping force can be set and the shoe subassembly 800 can be shipped from a location other than in a location where the jigsaw is assembled.

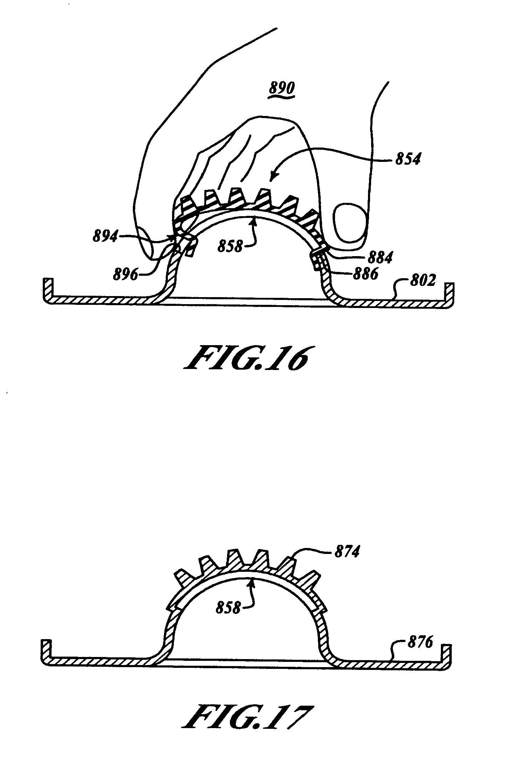

With reference to FIG. 16, the shoe insert 854 having the two rows of partial gear teeth 852, 818 (FIG. 14) can be assembled into the shoe member 802, which can be separately manufactured from the shoe insert 854. The shoe insert 854, as a separate component, can include the relatively complex structure detailed geometry of the first and second partial rows of gear teeth 852, 856. The fabrication of such relatively complex structures, in certain instances, is not required when fabricating the shoe member 802.

With reference to FIG. 17, a shoe insert 874 having the two rows of partial gear teeth 852, 856 (FIG. 14) can be produced with a shoe member 876 that can be monolithically manufactured together with the shoe insert 874. In one example, the shoe insert 874 and the shoe member 876 are all one piece of metal. While in another example, the shoe insert 854 can be manufactured separately but can be cast in place or mechanically or chemically fastened to the shoe member 876. In the above examples, the shoe insert 874 need not be flexible.

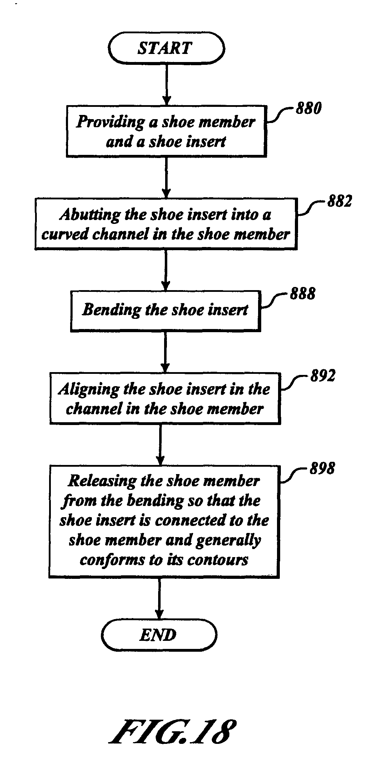

With reference to FIG. 18, a flowchart method of inserting the shoe insert 854 (FIG. 16) into the shoe member 802 (FIG. 16) generally includes, at 880, providing a shoe member 802 that defines a curved channel 858 (FIG. 13) and providing a shoe insert 854 configured to be accepted by the curved channel 858. At 882, a first end 884 (FIG. 16) of the shoe insert 854 can abut a first end 886 (FIG. 16) of the curved channel 858. At 888, at least a portion of the shoe insert 854 can be bent, flexed or otherwise distorted by a user 890 (FIG. 16). At 892, a second end 894 (FIG. 16) of the shoe insert 854 can be aligned with a second end 896 (FIG. 16) of the curve channel 858. At 898, the shoe insert 854 can be released from the bending or flexing at 888. After 898, the method can end.

With reference to FIGS. 19 and 20, an exemplary shoe member 900 is shown with portions of a housing 902 (and in some examples a shoe block member 904) visible through the shoe member 900. As such, a bottom 906 of the housing 902 can define stop members 908 that can interact with a complementary pocket 910 formed in channels 912 in the shoe member 900. In an example where the shoe block member 904 is implemented, the shoe block member 904 can connect to the housing 902 and the stop members 908 can extend from the shoe block member 904.

In one example, one or more of the stop members 908 can have a wedge shape and the pockets 910 can have a complementary wedge shape. In a further example, the stop members 908 can have a circular shape and the pockets 910 can have a complementary circular shape. When the shoe member 900 is positioned at a zero degree angular position (i.e., a perpendicular cutting angle), the shoe member 900 can be advanced in a direction 914 that can be axially backward relative to a cutting direction 916 (i.e., toward the right side of the page in FIG. 19) to engage the stop members 908 that extend from the housing 902. In this regard, the stop members 908 can move into complimentary pockets 910 and can provide a positive engagement at zero degrees.

Because of the wedge shape of the stop members 908, the complementary pockets 910 can be axially advanced onto the wedge shaped stop members 908. When there is any slack (i.e., gaps) in the contact between the stop members 908 and the complementary pockets 910, additionally advancing the shoe member 900 so that the complementary pockets 910 receive more and more of the wedge shaped stop members 908, can further close any gaps relative to a configuration of stop members not having the wedge shape but having parallel sides. In contrast, the stop members 908 having the wedge shape, can define walls 918 (FIG. 20) that converge toward the cutting direction 916 of the jigsaw, i.e., toward the left in FIG. 1.

By taking up the other tolerances in the shoe subassembly 800 (FIG. 14), other tolerances in the shoe subassembly 800 do not need to be held as tight as would otherwise be without the wedge shaped stop members 908 that extend from the housing 902 or shoe block member 804. It will be appreciated in light of the disclosure that the shoe member 900 and the above described shoe subassembly 800 can be implemented on any of the jigsaws 100, 200, 300, 400, 500, above.

With reference to FIG. 20, the shoe member 900 is shown in a position other than zero degrees (e.g., the cutting angle 354 (FIG. 6)). In this instance, the wedge shaped stop members 908 cannot be received within the wedge shaped pockets 910 formed in the shoe member 900 but advance along the channels 904 that contain pockets 910 as the shoe member pivots relative the housing 902. It will be appreciated in light of the disclosure that stop members 908 can extend from the housing 902 (or the shoe block member 904) at other angular positions (i.e., not at zero degrees) so that the shoe member 900 can be axially moved relative to housing 902 to provide positive engagement at one or more cutting angles. For example, stop members can provide for positive engagement of the shoe member 900 at zero degrees and at forty-five degrees. In other examples, stop members can provide for positive engagement of the shoe member 900 at only forty-five degrees.

With reference to FIG. 21, another example shoe member 950 is shown with portions of a housing 952 (or a shoe block member 954) visible through the shoe member 950. As such, a bottom of the housing 952 can define stop members 956 that can interact with complimentary pockets 958 formed in channels 960 in the shoe member 950. The shape of the stop members 956 and/or the pockets 958 can be similar to the stop members 908 and complimentary pockets 910 illustrated in FIGS. 19 and 20. The shoe member 950, however, can be positioned at a zero degree angular position and can be advanced in a direction 960 that can be axially forward relative to (i.e., in line with) the cutting direction 914 to engage the stop members 956 that extend from the housing 952. In this regard, the motion of the shoe member 950 can be similar to that of the shoe member 902 and FIG. 19, but can be moved in direction 960, in contrast to direction 912 (FIG. 19).

While specific aspects have been described in the specification and illustrated in the drawings, it will be understood by those skilled in the art that various changes can be made without departing from the scope of the present teachings, as defined in the claims.

## Claims

1. A jigsaw (100) comprising:
a housing (602) containing a motor activated by a trigger assembly;
a shoe member (120) pivotally connected to said housing (602);
a locking mechanism (130) having an unlocked condition that permits said shoe member (120) to pivot relative to said housing (600) and a locked condition that prevents said shoe member (120) from pivoting relative to said housing (602); and
a stop member (908) that extends from said housing, wherein said shoe member (120) is configured to be moved axially relative to said housing so that a portion of said shoe member engages said stop member (908) to prevent said shoe member from pivoting relative to said housing (602); **characterised by** further comprising:
an indicator wheel (604) disposed in said housing (602) so that a portion of said indicator wheel (604) is visible through a window (600) defined in said housing, wherein said pivoting of said shoe member (120) relative to said housing causes said indicator wheel to rotate.

2. The jigsaw of Claim 1, wherein said stop member (908) has a wedge shape.

3. The jigsaw of any preceding claim, wherein said shoe member (120) engages said stop member (908), when said shoe member (120) is in a position that aligns a cutting action generally perpendicular with said shoe member.

4. The jigsaw of any preceding claim wherein said shoe member (120) engages said stop member, when said shoe member (120) is in a position that forms an acute angle with said housing.

5. The jigsaw of any preceding claim, wherein said shoe member (120) defines a curved channel in which said stop member (908) travels when said shoe member pivots relative to said housing, wherein said curved channel defines a pocket having a wedge shape that receives said stop member (908) having a complementary wedge shape.

6. The jigsaw of any preceding claim, wherein said stop member (908) connects to a shoe block member that connects to said housing (602) of the jigsaw.

7. The jigsaw of any preceding Claim, wherein said indicator wheel (604) includes information descriptive of angular increments between about zero degrees and about forty five degrees, a portion of said information visible through said window (600).

8. The jigsaw of any preceding claim, wherein said housing (602) defines an airflow pathway (702) through which a dust extraction airflow passes capable of clearing debris from a cutting area and wherein said airflow pathway (702) is disposed through an inner periphery of said indicating wheel (604).

9. The jigsaw of any preceding claim, wherein said shoe member (120) produces an audible click as said shoe member moves through each angular increment in a range of angular increments relative to said housing (602) when said locking mechanism (130) is in said unlocked condition.

10. The jigsaw of Claim 6 when dependent on claim 5, further comprising a flexible shoe insert that is coupled to said curved channel of said shoe member (120) by flexing said shoe insert into said curved channel, wherein said flexible shoe insert includes a first row of gear teeth on said shoe member that engages with said indicator wheel (604) and a second row of gear teeth on said shoe member (120) that is operable to contact an interaction member connected to said shoe block member.

## Patentansprüche

1. Stichsäge (100), die Folgendes umfasst:
ein Gehäuse (602), das einen durch eine Auslöserbaugruppe aktivierten Motor enthält,
ein Schuhelement (120), das schwenkbar mit dem Gehäuse (602) verbunden ist,
einen Verriegelungsmechanismus (130), der einen entriegelten Zustand, der es ermöglicht, dass das Schuhelement (120) im Verhältnis zu dem Gehäuse (602) schwenkt, und einen verriegelten Zustand, der es verhindert, dass das Schuhelement (120) im Verhältnis zu dem Gehäuse (602) schwenkt, hat,
ein Anschlagelement (908), das sich von dem Gehäuse aus erstreckt, wobei das Schuhelement (120) dafür konfiguriert ist, in Axialrichtung im Verhältnis zu dem Gehäuse bewegt zu werden, so dass ein Abschnitt des Schuhelements das Anschlagelement (908) in Eingriff nimmt, um zu verhindern, dass das Schuhelement im Verhältnis zu dem Gehäuse (602) schwenkt, **dadurch gekennzeichnet, dass** es ferner Folgendes umfasst:
ein Anzeigerad (604), das so in dem Gehäuse (602) angeordnet ist, dass ein Abschnitt des Anzeigerades (604) durch ein in dem Gehäuse definiertes Fenster (600) zu sehen ist, wobei das Schwenken des Schuhelements (120) im Verhältnis zu dem Gehäuse bewirkt, dass sich das Anzeigerad dreht.

2. Stichsäge nach Anspruch 1, wobei das Anschlagelement (908) eine Keilform hat.

3. Stichsäge nach einem der vorhergehenden Ansprüche, wobei das Schuhelement (120) das Anschlagelement (908) in Eingriff nimmt, wenn sich das Schuhelement (120) in einer Stellung befindet, die eine Schneidwirkung im Allgemeinen senkrecht mit den Schuhelement ausrichtet.

4. Stichsäge nach einem der vorhergehenden Ansprüche, wobei das Schuhelement (120) das Anschlagelement in Eingriff nimmt, wenn sich das Schuhelement (120) in einer Stellung befindet, die einen spitzen Winkel mit dem Gehäuse bildet.

5. Stichsäge nach einem der vorhergehenden Ansprüche, wobei das Schuhelement (120) einen gekrümmten Kanal definiert, in dem sich das Anschlagelement (908) bewegt, wenn das Schuhelement im Verhältnis zu dem Gehäuse schwenkt, wobei der gekrümmte Kanal eine Tasche definiert, die eine Keilform hat, die das Anschlagelement (908) aufnimmt, das eine komplementäre Keilform hat.

6. Stichsäge nach einem der vorhergehenden Ansprüche, wobei das Anschlagelement (908) mit einem Schuhsperrelement verbunden ist, das mit dem Gehäuse (602) der Stichsäge verbunden ist.

7. Stichsäge nach einem der vorhergehenden Ansprüche, wobei das Anzeigerad (604) Informationen einschließt, die Winkelabstufungen zwischen etwa null Grad und etwa fünfundvierzig Grad beschreiben, wobei ein Teil der Informationen durch das Fenster (600) zu sehen ist.

8. Stichsäge nach einem der vorhergehenden Ansprüche, wobei das Gehäuse (602) einen Luftstrom-Durchgang (702) definiert, durch den ein Staubabsaugungsluftstrom hindurchgeht, der dazu in der Lage ist, Trümmer von einer Schneidfläche zu beseitigen, und wobei der Luftstrom-Durchgang (702) durch einen inneren Umfang des Anzeigerades (604) angeordnet ist.

9. Stichsäge nach einem der vorhergehenden Ansprüche, wobei das Schuhelement (120) ein hörbares Klicken erzeugt, wenn sich das Schuhelement im Verhältnis zu dem Gehäuse (602) durch jede Winkelabstufung in einem Bereich von Winkelabstufungen bewegt, wenn sich der Verriegelungsmechanismus (130) in dem entriegelten Zustand befindet.

10. Stichsäge nach Anspruch 6, soweit abhängig von Anspruch 5, die ferner einen flexiblen Schuheinsatz umfasst, der durch ein Biegen des Schuheinsatzes in den gekrümmten Kanal an den gekrümmten Kanal des Schuhelements (120) gekoppelt ist, wobei der flexible Schuheinsatz eine erste Reihe von Getriebezähnen an dem Schuhelement, die mit dem Anzeigerad (604) ineinandergreift, und eine zweite Reihe von Getriebezähnen an dem Schuhelement (120), die betätigt werden kann, um ein Wechselwirkungselement zu berühren, das mit dem Schuhsperrelement verbunden ist, einschließt.

## Revendications

1. Scie sauteuse (100) comprenant :
un boîtier (602) contenant un moteur activé par un ensemble de gâchette ;
un élément formant patin (120) raccordé à pivotement audit boîtier (602) ;
un mécanisme de verrouillage (130) ayant un état déverrouillé qui permet audit élément formant patin (120) de pivoter par rapport audit boîtier (602) et un état verrouillé qui empêche ledit élément formant patin (120) de pivoter par rapport audit boîtier (602) ; et
un élément d'arrêt (908) qui s'étend depuis ledit boîtier, ledit élément formant patin (120) étant configuré pour se déplacer axialement par rapport audit boîtier de sorte qu'une portion dudit élément formant patin s'engage sur ledit élément d'arrêt (908) pour empêcher ledit élément formant patin de pivoter par rapport audit boîtier (602) ;
**caractérisé en ce qu'**elle comprend encorne :
une roue indicatrice (604) disposée dans ledit boîtier (602) de sorte qu'une portion de ladite roue indicatrice (604) soit visible à travers une fenêtre (600) définie dans ledit boîtier, ledit pivotement dudit élément formant patin (120) par rapport audit boîtier amenant ladite roue indicatrice à tourner.

2. Scie sauteuse selon la revendication 1, dans laquelle ledit élément d'arrêt (908) a une forme de coin.

3. Scie sauteuse selon l'une quelconque des revendications précédentes, dans laquelle ledit élément formant patin (120) s'engage sur ledit élément d'arrêt (908) lorsque ledit élément formant patin (120) est dans une position qui aligne une action de coupe de manière généralement perpendiculaire audit élément formant patin.

4. Scie sauteuse selon l'une quelconque des revendications précédentes, dans laquelle ledit élément formant patin (120) s'engage sur ledit élément d'arrêt lorsque ledit élément formant patin (120) est dans une position qui forme un angle aigu avec ledit boîtier.

5. Scie sauteuse selon l'une quelconque des revendications précédentes, dans laquelle ledit élément formant patin (120) définit un canal incurvé dans lequel ledit élément d'arrêt (908) se déplace lorsque ledit élément formant patin pivote par rapport audit boîtier, dans laquelle ledit canal incurvé définit une poche en forme de coin qui reçoit ledit élément d'arrêt (908) ayant une forme de coin complémentaire.

6. Scie sauteuse selon l'une quelconque des revendications précédentes, dans laquelle ledit élément d'arrêt (908) se raccorde à un élément de blocage de patin qui se raccorde audit boîtier (602) de la scie sauteuse.

7. Scie sauteuse selon 1"une quelconque des revendications précédentes, dans laquelle ladite roue indicatrice (604) comprend des informations définissant des incréments angulaires entre environ zéro degré et environ quarante cinq degrés, une partie desdites informations étant visible à travers ladite fenêtre (600).

8. Scie sauteuse selon l'une quelconque des revendications précédentes, dans laquelle ledit boîtier (602) définit un trajet d'écoulement d'air (702) par lequel passe un écoulement d'air extracteur de poussière qui est à même d'évacuer les débris d'une zone de coupe et dans laquelle ledit trajet d'écoulement d'air (702) est disposé à travers une périphérie interne de ladite roue indicatrice (604).

9. Scie sauteuse selon l'une quelconque des revendications précédentes, dans laquelle ledit élément formant patin (120) produit un claquement audible lorsque ledit élément formant patin se déplace à travers chaque incrément angulaire dans une plage d'incréments angulaires par rapport audit boîtier (602) lorsque ledit mécanisme de verrouillage (130) se trouve dans ledit état déverrouillé.

10. Scie sauteuse selon la revendication 6 dans la mesure où elle dépend de la revendication 5, comprenant en outre un insert de patin flexible qui est couplé audit canal incurvé dudit élément formant patin (120) en fléchissant ledit insert de patin dans ledit canal incurvé, dans laquelle ledit insert de patin flexible comprend une première rangée de dents d'engrenage ménagées sur ledit élément formant patin qui s'engage sur ladite roue indicatrice (604) et une seconde rangée de dents d'engrenage ménagées sur ledit élément formant patin (120) qui est à même de venir en contact avec un élément d'interaction raccordé audit élément de blocage de patin.
